# EUROPEAN PATENT APPLICATION

(11) **EP 3 337 229 A1**
(43) Date of publication of application: **20.06.2018**
(21) Application number: 16835098.1
(22) Date of filing: 05.08.2016
(51) Int. Cl.: H04W 28/04, H04W 72/04

(54) **WIRELESS BASE STATION, USER TERMINAL, AND WIRELESS COMMUNICATION METHOD**

(30) Priority: 13.08.2015 JP 2015159978
(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); LIU, Liu, Beijing 100190 (CN); JIANG, Huiling, Beijing 100190 (CN)
(74) Representative: Hoffmann Eitle
(86) International application number: PCT/JP2016/073146
(87) International publication number: WO 2017/026401

(57) **Abstract**

The present invention is designed so that it is possible to feed back HARQ-ACKs adequately and prevent the decrease of communication quality even when a plurality of component carriers are configured in a radio communication system. A radio base station communicates with a user terminal that can use a plurality of cells, and has a control section that controls DL transmission from each cell, and a receiving section that receives ACKs/NACKs fed back from the user terminal in response to DL transmission, and, in this radio base station, the control section controls DL transmission by including, in downlink control information of each cell that performs DL transmission, information that indicates whether or not each cell transmitting the downlink control information is a specific cell.

## Description

### Technical Field

The present invention relates to a user terminal, a radio base station and a radio communication method in next-generation mobile communication systems.

### Background Art

In the UMTS (Universal Mobile Telecommunications System) network, the specifications of long term evolution (LTE) have been drafted for the purpose of further increasing high speed data rates, providing lower delays and so on (see non-patent literature 1). Also, successor systems of LTE (also referred to as, for example, "LTE-advanced" (hereinafter referred to as "LTE-A"), "FRA" (Future Radio Access) and so on) are under study for the purpose of achieving further broadbandization and increased speed beyond LTE.

The system configuration of LTE Rel. 10-12 includes at least one component carrier (CC), where the LTE system band constitutes one unit. Such bundling of a plurality of component carriers (cells) into a wide band is referred to as "carrier aggregation" (CA). In LTE Rel. 10-12 systems, CA to use maximum 5 CCs is utilized.

In LTE systems, hybrid automatic repeat request (HARQ: Hybrid Automatic Repeat reQuest) is supported in order to suppress degradation of communication quality due to signal reception failures in radio communication between a user terminal (UE) and a radio base station (eNB). For example, a user terminal feeds back delivery acknowledgment signals (referred to as "HARQ-ACKs," and also referred to as "ACK/NACKs") depending on the condition of reception of DL signals transmitted from a radio base station. There is a rule that, when the user terminal transmits HARQ-ACKs in an uplink control channel (PUCCH), the user terminal uses predetermined PUCCH formats according to the number of CCs (or cells) and so on (see non-patent literature 2).

### Citation List

### Non-Patent Literature

Non-Patent Literature 1: 3GPP TS 36.300 "Evolved Universal Terrestrial Radio Access (E-UTRA) and Evolved Universal Terrestrial Radio Access Network (E-UTRAN); Overall Description; Stage 2"
Non-Patent Literature 2: 3GPP TS 36.213 "Evolved Universal Terrestrial Radio Access (E-UTRA) Physical layer procedures (Release 12)"

### Summary of Invention

### Technical Problem

In existing LTE systems (Rel. 12 or earlier versions), the bit size of ACKs/NACKs (also referred to as the "codebook size" and the "bit sequence size") that are fed back by a user terminal is semi-statically determined in advance, based on information reported from a radio base station through higher layer signaling (the number of CCs and so on). Therefore, when applying CA, the user terminal feeds back ACKs/NACKs in a codebook size that is fixedly determined based on the number of CCs and so on.

Therefore, when the number of CCs configured in the user terminal and the number of CCs where DL signals are scheduled in a given subframe are different, the codebook size cannot be changed in the user terminal. This might result in the case where, even when the number of CCs that are actually scheduled is small, the size of ACKs/NACKs to be transmitted is unnecessarily large.

Also, although, in Rel. 12 or earlier versions, the maximum number of CCs that can be configured in CA is 5, the number of configurable CCs is expected to be increased in Rel. 13 and later versions. In this case, if the bit size of ACKs/NACKs is determined in the same way as in existing LTE systems, the number of CCs that are configured and the number of CCs that are scheduled may differ significantly. This may result in increasing the overhead of UL transmission.

Meanwhile, it may be possible to dynamically control the codebook size of HARQ-ACKs to feed back, based on, for example, DL signals received in the user terminal (for example, based on the number of CCs where DL signals are received). However, if the user terminal fails to detect DL signals or makes error detection, this may lead to the situation where the recognition of the codebook size differs between the radio base station and the user terminal. In this case, there is a possibility that the radio base station is unable to properly decode the ACKs/NACKs fed back from the user terminal, and the quality of communication may be lowered.

The present invention has been made in view of the above, and it is therefore an object of the present invention to provide a radio base station, a user terminal and a radio communication method that enable adequate feedback of HARQ-ACKs and that can prevent the decrease of communication quality even when a plurality of component carriers are configured in a radio communication system.

### Solution to Problem

According to one aspect of the present invention, a radio base station communicates with a user terminal that can use a plurality of cells, and has a control section that controls DL transmission from each cell, and a receiving section that receives ACKs/NACKs fed back from the user terminal in response to DL transmission, and, in this radio base station, the control section controls DL transmission by including, in downlink control information of each cell that performs DL transmission, information that indicates whether or not each cell transmitting the downlink control information is a specific cell.

### Advantageous Effects of Invention

According to one aspect of the present invention, it is possible to feed back HARQ-ACKs adequately and prevent the decrease of communication quality even when a plurality of component carriers are configured in a radio communication system.

### Brief Description of Drawings

FIG. 1A is a diagram to show downlink scheduling in a plurality of CCs, and FIG. 1B is a diagram to show an example of a case where 32 CCs are configured;
FIG. 2 is a diagram to show an example of recognition of scheduling CCs between a user terminal and a radio base station;
FIG. 3 is a diagram to show an example of ACK/NACK transmission using DAIs;
FIG. 4 is a diagram to show an example of a table showing the bit information in the TPC field according to a first example;
FIG. 5 is a diagram to show an example of an ACK/NACK transmission method according to the first example;
FIG. 6A and FIG. 6B are diagrams to show examples of an ACK/NACK transmission method according to a second example;
FIG. 7A is a diagram to show an example of a scheduling information reporting method according to a third example, and FIG. 7B is a diagram to show a table in which four patterns (2 bits) of combinations of cells are defined;
FIG. 8 is a diagram to show an example of a table showing scheduling information according to the third example;
FIG. 9 is a diagram to show an example of a method of using DCI format 2 according to the third example;
FIG. 10 is a diagram to show the status of scheduling of each CC according to the third example;
FIG. 11 is a diagram to show an example of a table showing the bit information in the TPC field according to fourth example;
FIG. 12 is a diagram to show a schematic structure of a radio communication system according to an embodiment of the present invention;
FIG. 13 is a diagram to show an example of an overall structure of a radio base station according to an embodiment of the present invention;
FIG. 14 is a diagram to show an example of a functional structure of a radio base station according to one embodiment of the present invention;
FIG. 15 is a diagram to show an example of an overall structure of a user terminal according to an embodiment of the present invention; and
FIG. 16 is a diagram to show an example of a functional structure of a user terminal according to an embodiment of the present invention.

### Description of Embodiments

In LTE systems, retransmission control (HARQ-ACK (Hybrid Automatic Repeat reQuest Acknowledgment), ACK/NACK (ACKnowledgments/Negative ACKnowledgment), etc.) is supported in wireless communication between user terminals and radio base stations using a plurality of CCs (cells). For example, the user terminal feeds back ACKs/NACKs (or DTX) to the radio base station based on the receiving results of DL signals transmitted from the radio base station.

In LTE systems, a plurality of PUCCH formats for allowing user terminals to transmit ACKs/NACKs (HARQ-ACKs) to radio base stations by using an uplink control channel (PUCCH) are defined. Here, ACK/NACKs are formed with a bit sequence of a predetermined length, comprised of bits that represent ACKs or NACKs.

For example, when PUCCH format 1a/1b is configured in the user terminal, the user terminal transmits an ACK/NACK signal in a PUCCH resource that corresponds to a CCE/ECCE (Control Channel Element/Enhanced CCE) index of a control channel (PDCCH/EPDCCH) that schedules the PDSCH, without encoding.

Also, when PUCCH format 3 is configured in the user terminal, the user terminal interprets the TPC (Transmit Power Control) field (TPC command bit) included in the PDCCH/EPDCCH of an SCell, as an ARI (Ack/nack Resource Indicator), and transmits an ACK/NACK signal using one PUCCH resource that is specified by the ARI among four resources that are configured by higher layer signaling. At this time, the value of the ARI is preferably the same between PDCCHs and EPDCCHs that schedule the PDSCHs of different SCells. In PUCCH format 3, when FDD (Frequency Division Duplex) is used, a codebook size of maximum 10 bits is configured, and, when TDD (Time Division Duplex) is used, a codebook size of maximum 21 bits is configured, and these are used for ACKs/NACKs.

In existing systems (LTE Rel. 10 to 12), as mentioned earlier, the codebook size of HARQ-ACKs (ACK/NACK bit sequence) to be transmitted on the PUCCH is determined semi-statically based on information reported by higher layer signaling.

In the case of using FDD, the overall ACK/NACK (A/N) bit size is determined based on the number of CCs configured by RRC signaling and the TM (Transmission Mode), which indicates whether MIMO (Multiple Input Multiple Output) is applicable in each CC. In this case, the user terminal transmits the ACK/NACK bit sequence based on higher layer signaling regardless of the number of CCs to be scheduled.

In the case of using TDD, in addition to the above case of using FDD, the overall ACK/NACK bit sequence size is determined based on the number of DL subframes subject to feedback of delivery acknowledgment signals (ACKs/NACKs) per PUCCH in one UL subframe. The user terminal transmits the ACK/NACK bit sequence based on higher layer signaling, irrespective of the number of CCs to be scheduled and the number of subframes included in the scheduling information.

In this way, when the bit size of ACKs/NACKs to be fed back is determined based on information reported by higher layer signaling, the situation might arise where the ACK/NACK bit size does not match the number of CCs actually scheduled in the user terminal.

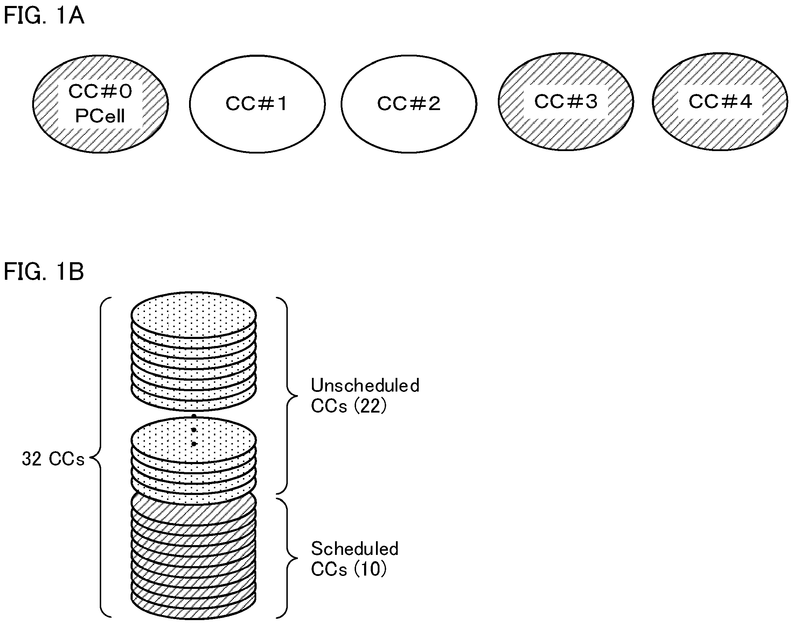

For example, assume the case where five CCs (CCs #0 to #4) are configured in the user terminal that uses CA, and where a DL signal is transmitted to the user terminal using 3 CCs (CCs #0, #3 and #4) in a given subframe (see FIG. 1A). In the example shown in FIG. 1A, only three CCs -- CC #0, CC #3 and CC #4 -- are scheduled. However, since the ACK/NACK size reported from higher layer signaling corresponds to five CCs, the user terminal transmits ACKs/NACKs for five CCs. In this case, since the PDCCHs/EPDCCHs corresponding to unscheduled CCs (CC #1 and CC #2) cannot be detected, the user terminal determines that NACKs should be fed back.

In existing systems, even when the ACK/NACK codebook size to match the CCs that are actually scheduled (CCs where DL signals are transmitted) is different from the codebook size reported by higher layer signaling, the user terminal still cannot change the codebook size.

Now, in CA in LTE Rel. 10 to 12, the number of CCs that can be configured per user terminal is limited to maximum five. On the other hand, in LTE Rel. 13 and later versions, in order to realize more flexible and faster wireless communication, a study is in progress to reduce the limit on the number of CCs that can be configured in a user terminal and to configure 6 or more CCs (more than five CCs, up to, for example, 32 CCs) (see FIG. 1B). Here, carrier aggregation in which six or more CCs can be configured may be referred to as, for example, "enhanced CA," "Rel. 13 CA," and so on.

As described above, when the number of CCs to be configured is expanded, it is possible that the gap between the number of CCs configured and the number of CCs scheduled in each subframe increases. If the number of CCs where DL signals are scheduled is less than the number of CCs to be configured and the codebook size is determined semi-statically as in conventional cases, this leads to the situation where most of the ACKs/NACKs transmitted from the user terminal are NACKs. For example, FIG. 1B shows a case where 32 CCs are configured in the user terminal and where the number of CCs actually scheduled is 10. In this case, the number of actually scheduled cells (ten CCs) is smaller than the total number of CCs (32 CCs), and more than half of the CCs are returned NACKs.

Also, the smaller the ACK/NACK codebook size, the smaller the amount of information transmitted by the user terminal. Therefore, if the codebook size of ACKs/NACKs can be reduced, the quality of communication (SINR: Signal to Interference plus Noise Power Ratio) required in radio transmission can be kept low. For example, in CA using five CCs at a maximum, the SINR required in ACK/NACK transmission can be kept low by decreasing the codebook size of ACKs/NACKs fed back by the user terminal according to the CCs that are scheduled.

Therefore, it is effective to make it possible to dynamically change the codebook size of ACKs/NACKs (HARQ-ACKs) that the user terminal feeds back, according to the number of CCs that are scheduled.

In the case where the codebook size of ACKs/NACKs to be fed back from the user terminal can be changed dynamically, for example, the user terminal may change the number of ACK/NACK bits dynamically depending on the number of scheduled CCs and so on. As a method of changing the number of ACK/NACK bits dynamically like this, for example, the user terminal may determine the number of ACK/NACK bits based on the number of downlink signals detected (for example, PDSCH-scheduling PDCCHs/EPDCCHs).

In this way, by controlling the codebook size of ACKs/NACKs based on downlink control information (PDCCH/EPDCCH) detected by the user terminal, the codebook size can be appropriately reduced according to the number of CCs that are scheduled.

Incidentally, in a PUCCH format (for example, format 3) for use for ACKs/NACKs to which CA is applied, the ACK/NACK bit sequence is subjected to error correction coding (for example, block coding) and transmitted. Therefore, if the recognition of the codebook size does not match between the user terminal that performs encoding and the radio base station that performs decoding, the radio base station cannot correctly decode the ACKs/NACKs fed back from the user terminal.

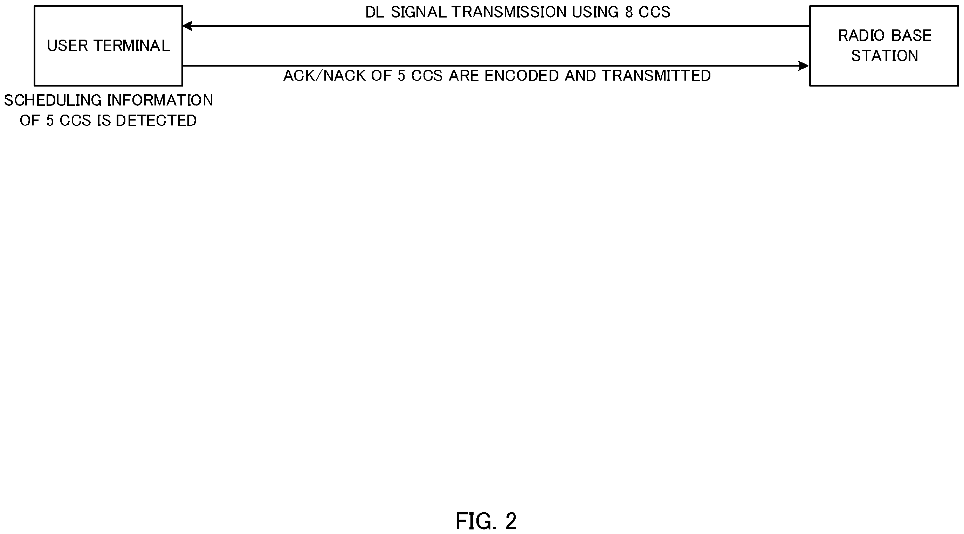

For example, when a detection failure or error detection occurs and the number of CCS which the user terminal recognizes is different from the number of CCs actually scheduled, the situation arises where the recognition of the codebook (bit sequence) size does not match between the radio base station and the user terminal (see FIG. 2). FIG. 2 shows a case where, although the radio base station performs scheduling (DL signal transmission) for the user terminal by using 8 CCs, the user terminal detects only the PDCCHs/EPDCCHs (scheduling information) for five CCs. That is, the user terminal fails to detect the DL signals (for example, PDCCHs/EPDCCHs) of 3 CCs.

Referring to FIG. 2, if the ACK/NACK codebook size is determined based on the DL signals (the number of CCs) detected by the user terminal, the user terminal transmits an ACK/NACK bit sequence for the five CCs detected, to the radio base station. For this reason, the radio base station cannot perform decoding properly, and the entire ACK/NACK bit sequence is affected, and the quality of feedback using ACKs/NACKs is severely deteriorated.

In this way, when the user terminal fails to detect DL signals transmitted from the radio base station in a predetermined CC, the user terminal judges the number of CCs allocated smaller than the number of CCs in which DL signals are transmitted from the radio base station. Further, when the user terminal makes error detection of DL signals transmitted from the radio base station, the user terminal judges the number of allocated CCs bigger than the number of CCs in which DL signals are transmitted from the radio base station.

Although the method of determining the codebook size of ACKs/NACKs to transmit from the user terminal based on the number of PDCCHs/EPDCCHs detected is easy to implement, when detection failures or error detections occur, the recognition of the codebook size does not match between the radio base station and the user terminal. In this case, as described above, the quality of feedback based on ACKs/NACKs deteriorates, and the quality of communication may be severely deteriorated.

Alternatively, the user terminal may identify the cells scheduled in a given subframe (cells where DL transmission has been performed) based on the DL assignment index (DAI: Downlink Assignment Indicator (Index)) included in each cell's downlink control information. DAIs are values assigned to every scheduled cell and are used to indicate the number (cumulative number) of scheduling cells.

For example, the radio base station includes different DAIs in every scheduled cell's downlink control information and transmits the same. The DAIs to be included in the downlink control information of cells can be configured in ascending order based on, for example, cell indices and/or the like. In this case, the DAI of the cell with the largest cell index among the scheduled cells is the maximum DAI (the number of scheduled cells).

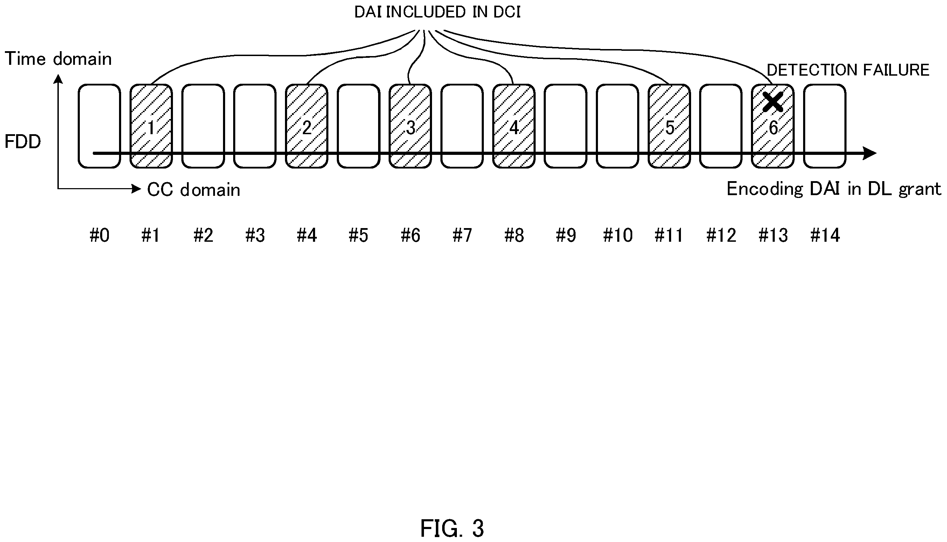

Assuming the case where DL signals are received from a plurality of cells, if the values of the DAIs (cumulative numbers) included in the downlink control information of the cells are not continuous, the user terminal can judge that it has made a detection failure in the cell corresponding to the missing DAI. For example, as shown in FIG. 3, assume the case where, in a given subframe, DL transmission is made using 6 CCs (CC #1, #4, #6, #8, #11 and #13) to a user terminal where 15 CCs are configured.

In this case, the radio base station configures different DAIs (1 to 6) in the downlink control information of the 6 CCs (CCs #1, #4, #6, #8, #11 and #13) and transmits the same. For example, if the user terminal fails to detect CC #6, then the DAIs detected in the user terminals are 1, 2, and 4 to 6, so that the user terminal can judge that it has made a detection failure with respect to a predetermined CC. In this case, the user terminal can decide to feed back a NACK with respect to the CC which the user terminal has failed to detect, and, furthermore, determine the ACK/NACK codebook size based on the largest DAI detected (here, 6) and send feedback. The radio base station can retransmit the DL signal in CC #6 based on the information fed back from the user terminal.

In this way, by using DAIs, it is possible to match the recognition of the ACK/NACK codebook size between the user terminal and the radio base station, and, furthermore, on the radio base station side, apply appropriate retransmission control to CCs which the user terminal fails to detect.

However, the present inventors have found out that, even when DAIs are used, if the user terminal fails to detect the cell in which the DAI included in the downlink control information is the largest among the scheduled cells, the user terminal is unable to recognize this detection failure. For example, in FIG. 3, even if the user terminal fails to detect CC #13, the DAIs detected in the user terminal are 1 to 5 and consecutive, and therefore the user terminal is unable to recognize that it has failed to detect CC #13. In this case, the user terminal judges that five CCs (CCs #1, #4, #6, #8 and #11) are scheduled, and determines the codebook size and feeds back ACKs/NACKs accordingly. This result in the situation where the recognition of the ACK/NACK codebook size is inconsistent between the user terminal and the radio base station.

So, the present inventors have come up with the idea that information to indicate whether or not a cell where DL transmission is performed (scheduling target cell) is a specific cell can be included in each cell's downlink control information and reported to the user terminal. The "specific cell" here may be, for example, the cell where the value of the DL assignment index included in the cell-specific downlink control information is the largest among the cells in which DL transmission takes place, or the cell with the largest cell index.

By this means, even when the user terminal fails to detect downlink control information pertaining to a specific cell, the user terminal can still recognize the detection failure of this specific cell based on information included in the downlink control information of successfully received cells. In addition, since DAIs are included in downlink control information, even when the user terminal fails to detect downlink control information pertaining to a cell other than the specific cell, the user terminal can recognize the detection failure of this cell based on the DAIs. As a result, even if the user terminal fails to detect one or more of scheduled cells, the user terminal can still determine the ACK/NACK codebook size taking the detection failure into consideration.

Therefore, the present inventors have come up with the idea of reporting information about the cells that perform DL transmission (scheduling target cells) to the user terminal, and allowing the user terminal to control the codebook size of ACKs/NACK to transmit based on the information about the scheduling target cells.

According to the present embodiment, the user terminal receives information for specifying the cells to be scheduled, and controls the feedback of ACKs/NACKs based on this information. In this way, by controlling the feedback of ACKs/NACKs based on information for specifying the cells to be scheduled, it is possible to change the codebook size of ACKs/NACKs on a dynamic basis, and, furthermore, it is possible to match the recognition of the target codebook size between the radio base station and the user terminal. By this means, even when a plurality of component carriers are configured in a radio communication system, HARQ-ACKs can be properly fed back, and the deterioration in communication quality can be suppressed.

Now, embodiments of the present invention will be described below. In the following description, examples will be described in which information about scheduling-target cells is transmitted from the radio base station to the user terminal by using DCI (Downlink Control Information) included in the PDCCH or the EPDCCH, but embodiments of the present invention are not limited to this. For example, information about scheduling-target cells may be transmitted using DL MAC CE (DownLink Medium Access Control Control Element).

In addition, although PUCCH format 3 can be used for HARQ-ACK feedback, this is not limiting. It is equally possible to use a new PUCCH format having larger capacity than PUCCH format 3. When dual connectivity (DC) is used, MCG to include PCell and SCG to include PSCell that transmits the PUCCH are classified, but it is also possible to replace PSCell with PCell and apply this to SCG. Also, the number and arrangement of cells to be scheduled, the indices of cells to be scheduled, and the signals to be transmitted are not limited to those in the following examples.

### (First Example)

A case will be described with the first example where bit information to indicate whether or not a scheduled cell is a specific cell is configured in a predetermined field included in the downlink control information of the scheduled cell (CC). To be more specific, a case where the power control field (TPC field) is used as a predetermined field and configured in combination with other information will be described. Incidentally, a predetermined cell's downlink control information includes downlink control information (cross-carrier scheduling) transmitted in other cells as well as downlink control information transmitted in the predetermined cell.

The radio base station can use the TPC field included in the downlink control information of each cell to report to the user terminal whether or not each cell is a specific cell. For example, when the TPC field is comprised of a plurality of bit values (for example, TPC command values for the PUCCH), the radio base station configures a predetermined bit value in association with the specific cell.

The specific cell may be, for example, the cell where the value of the DL assignment index included in the cell-specific downlink control information is the largest among the cells in which DL transmission takes place, or the cell with the largest cell index. The specific cell may be formed with a secondary cell. Further, the downlink control information of the specific cell is the PDCCH that is scheduled last among a plurality of cells ("last PDCCH").

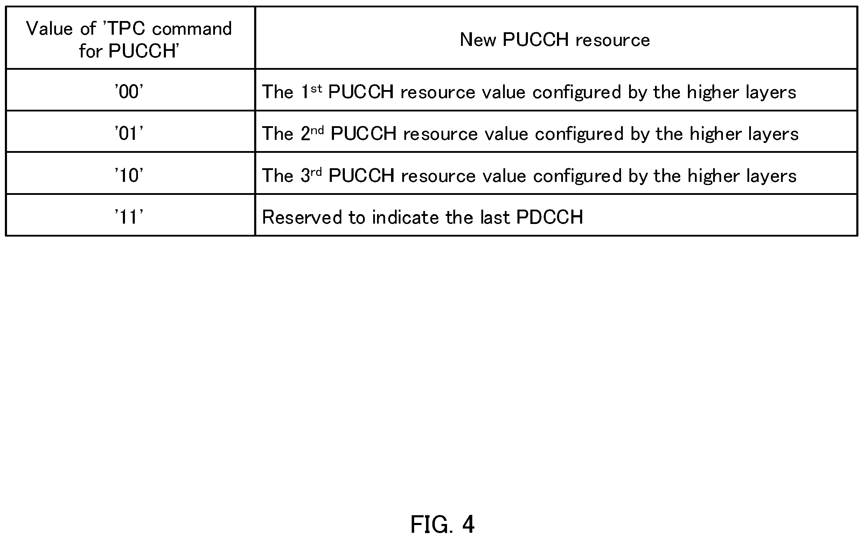

FIG. 4 is a diagram to show an example of a table in which the bit information to configure in the TPC field (TPC command values for the PUCCH) according to the first example is defined. In the table shown in FIG. 4, the TPC field is composed of 2 bits, and a predetermined bit value (here, "11 ") is configured in association with a specific cell (last PDCCH). That is, bit information having different contents is defined in combination, by using the power control field.

In this case, the TPC field in the downlink control information of the primary cell is used to control the power of the PUCCH, and, in the TPC field in the downlink control information of secondary cells, bit information for identifying the specific cell (for example, "11") can be provided. That is, in the TPC field of a secondary cell, bit information to indicate PUCCH resources ("00," "01," and "10" in FIG. 4) and information to identify the specific cell ("11" in FIG. 4) are combined and defined.

The radio base station configures a predetermined bit value (for example, "11") in the TPC field of the downlink control information (last PDCCH) of the specific cell and performs DL transmission. On the other hand, in the TPC field of the downlink control information of another cell (for example, a secondary cell different from the specific cell), the radio base station selects one of the bit values for use for determining PUCCH resources (for example, "00," "01 " and "10") and performs DL transmission.

Based on the bit value of the TPC field included in the downlink control information of each cell in which DL transmission is performed, the user terminal can learn the power of the primary cell's PUCCH, the PUCCH resources to use for ACK/NACK feedback, and/or the specific cell, and control UL transmission accordingly.

When only the downlink control information of the primary cell is detected, the user terminal can judge that DL transmission is performed only in the primary cell, and can control ACK/NACK feedback. In this case, the user terminal can feed back ACKs/NACKs using PUCCH formats 1a/1b of existing systems (fallback).

When only the downlink control information (TPC command) of the specific cell is detected, the user terminal cannot receive the PUCCH resource-related information reported by the TPC commands of the other cells (secondary cells). In this case, the user terminal can perform control not to transmit ACKs/NACKs in response to this specific cell. Alternatively, the user terminal can control the transmission of ACKs/NACKs for the specific cell using predetermined PUCCH resources.

When only the downlink control information corresponding to the specific cell is detected, the user terminal cannot acquire information about the PUCCH resources for use for ACK/NACK feedback. Therefore, in this case, the user terminal can perform control so as to transmit the PUCCH using predetermined resources or not to transmit the PUCCH.

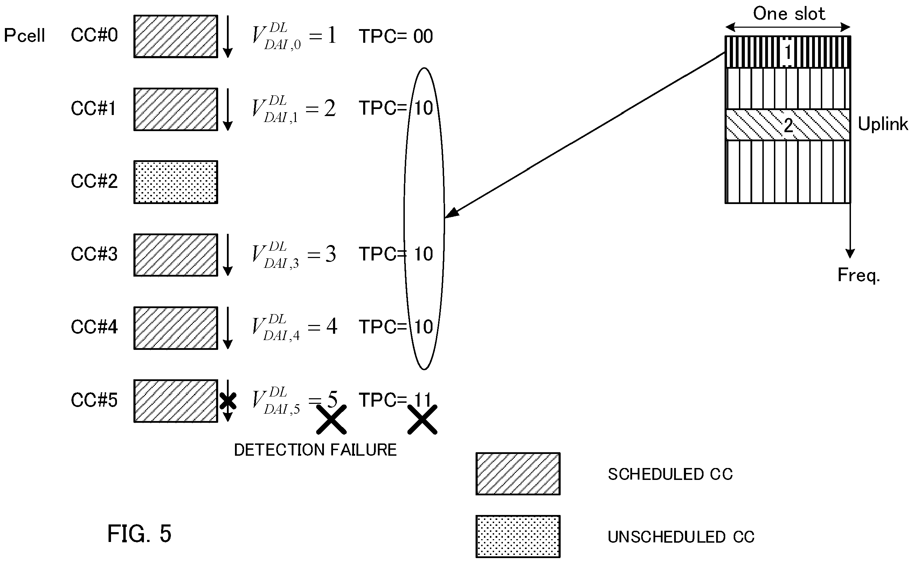

In FIG. 5, a case is shown in which one primary cell (CC #0) and five secondary cells (CC #1 to #5) are configured, and in which DL transmission is performed in CCs #0, #1 and #3 to #5. Also, a case is shown where the DAI values are configured (accumulated) according to the order of cell IDs. In FIG. 5, CC #5 is the cell with the largest DAI value among the cells that are scheduled, and the downlink control information of CC #5 is the last PDCCH scheduled among the plurality of cells.

In this case, the radio base station controls the PUCCH transmission power in the user terminal by using the TPC field (in this case, the bit value "00") of the downlink control information of CC #0. Also, the radio base station uses the TPC field (in this case, the bit value "10") in the downlink control information of CCs #1, #3 and #4 to report the PUCCH resources for use for the user terminal to feed back ACKs/NACKs. Further, the radio base station reports to the user terminal that CC #5 is a specific cell, using the TPC field (here, the bit value "11") of the downlink control information of CC #5.

Based on the TPC field included in the downlink control information of received cells, the user terminal controls the transmission power of the PUCCH, selects PUCCH resources, and identifies the specific cell. When all the scheduled CCs (CC #0, #1 and #3 to #5) are received, the user terminal controls the transmission of ACKs/NACKs based on the downlink control information and the received result (ACK/NACK) of each CC. For example, when ACKs are transmitted to CC #0, #1, #4, and #5 and a NACK is transmitted to CC #3, the user terminal, using the PUCCH resource corresponding to the bit value "10," allocates the ACK/NACK information ("1, 1, 0, 1, 1") to PUCCH resource #1 and transmits the same. Here, a "1" corresponds to an ACK, and a "0" corresponds to a NACK.

On the other hand, assume the case where the user terminal detects CCs #0, #1 and #4 and decides to transmit ACKs, detect CC #3 but decides to transmit a NACK, and fails to detect #5 (see FIG. 5).

If the user terminal cannot receive the downlink control information (TPC field "11") of CC #5, the user terminal judges that it has failed to detect the specific cell. In this case, the user terminal feeds back a NACK for the specific cell. In FIG. 5, the user terminal allocates the ACK/NACK information ("1, 1, 0, 1, 0") to PUCCH resource #1 and transmit this, by using the PUCCH resource corresponding to the bit value "10." Furthermore, the user terminal can judge that the number of CCs in which DL transmission has been performed is one more than the number of actually detected CCs (here, 4), and control the ACK/NACK codebook size accordingly.

Based on the results ("1, 1,0, 1, 0") fed back from the user terminal in PUCCH resource 1, the radio base station can judge that DL signals have not been received properly in CC #3 and CC #5, and apply retransmission control to CC #3 and CC #5.

In this way, by including information that identifies the cell having the largest DAI in each cell' s downlink control information and reporting this to the user terminal, even if the user terminal fails to detect the cell with the largest DAI, the user terminal recognize this failed detection and control the transmission of ACKs/NACKs. By this means, it is possible to match the recognition of the codebook (bit sequence) size between the radio base station and the user terminal, and transmit ACKs/NACKs accordingly. Thus, even when a plurality of component carriers are configured in a radio communication system, HARQ-ACKs can be properly fed back, and the deterioration in communication quality can be suppressed.

Note that, in LTE, it is possible to configure a different transmission mode (TM: Transmission Mode) in each CC. As for the number of ACK/NACK bits to be transmitted from the user terminal, one bit or a plurality of bits (for example, two bits) may be transmitted depending on the TM. When varying TMs are configured on a per CC basis in the user terminal, the codebook size changes depending on in which CC downlink control information with the TPC field "11" (the bit information for identifying the specific cell) is transmitted. In other words, when different TMs are configured between CCs, it is necessary to know the TM of the CC in which downlink control information with the TPC field "11 " is transmitted.

Therefore, information to indicate whether or not a cell in which DL transmission is performed (scheduling target cell) is the specific cell is configured to be included in the downlink control information of each cell and reported, the user terminal can apply spatial bundling to all CCs. In this case, since MIMO is applied, for the demodulation result of the PDSCH of a CC where two or more transport blocks (TBs) are scheduled, a 1-bit ACK/NACK is fed back as an exclusive OR result. In this case, it is possible to match the recognition of the size of the codebook regardless of which TM is configured in each CC and the specific cell (for example, the cell with the TPC field "11").

Alternatively, if the information to indicate whether or not a cell in which DL transmission is performed is the specific cell is configured to be included in the downlink control information of each cell and reported, the user terminal may feed back 2-bit ACKs/NACKs in all CCs. Alternatively, the user terminal may feed back 2-bit ACKs/NACKs in all CCs if, among all the CCs, there is even one CC where a TM to require feedback of 2-bit ACKs/NACKs is configured, and, otherwise, feed back 1-bit ACKs/NACKs in all CCs.

Alternatively, the user terminal may determine the number of ACK/NACK bits based on the TM configured in each CC, and, the radio base station may try decoding with respect to two patterns of codebooks sizes for use when the ACKs/NACKs for the specific cell are one bit and two bits. In this case, the radio base station can select the codebook size, with which the decoding result is OK, as the codebook size of ACKs/NACKs transmitted from the user terminal.

### (Second Example)

A case will be described with a second example where bit information to indicate whether or not a scheduled cell is a specific cell is configured using the DL assignment index (DAI) included in the downlink control information of the scheduled cell (CC). To be more specific, a case to use an extension field, in which a bit value is added to the DAI, as a predetermined field, will be described below. Note that the extension field may be configured separately from the DAI field, or may be added to other fields.

Using the value added to the DAI field (for example, an extension field of one bit), the radio base station can report to the user terminal whether or not the cell which the downlink control information to include this DAI corresponds to is the specific cell.

For example, if the bit value of the extension field of the DAI included in downlink control information is "0," it may be determined that the cell is the cell having the largest DAI (cumulative number) (last PDCCH), and, if the bit value is "1," it may be determined that the cell is a different cell. In this case, the radio base station configures "0" in the extended DAI field of the downlink control information (last PDCCH) of the cell with the largest DAI among the cells that are scheduled, configures "1" in the extended DAI field of the other cells, an reports these to the user terminal.

Based on the DAI field (for example, three bits) and the extension field (for example, one bit) in the downlink control information of each cell, the user terminal can identify cells that are actually scheduled. For example, when the user terminal demodulates downlink control information and the bit value (for example, "0") to indicate the specific cell is not configured in the extension field in any of the downlink control information, the user terminal assumes that the specific cell has not been detected. In this case, the user terminal can control the feedback of HARQ-ACK by assuming a NACK for the specific cell and determining the ACK/NACK codebook size accordingly.

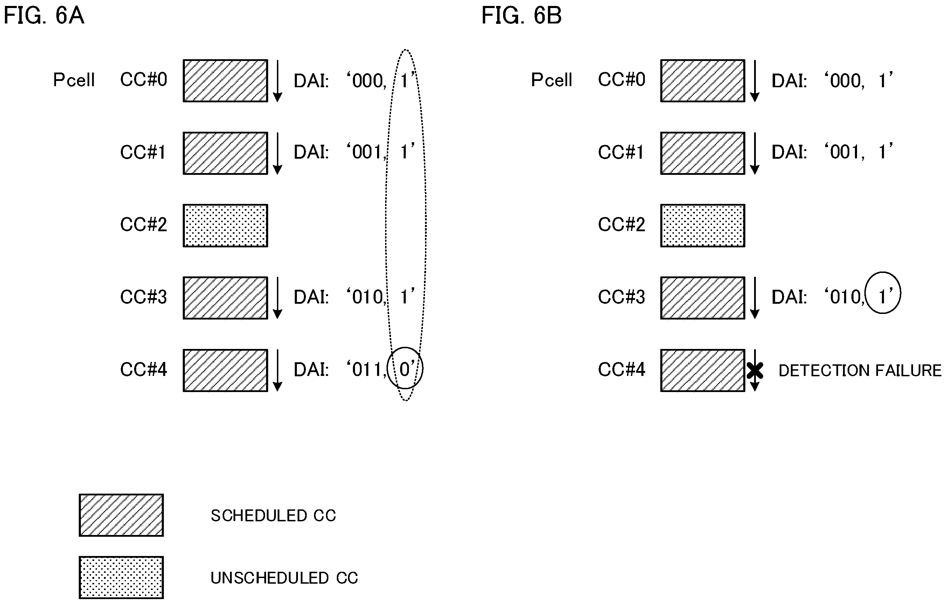

In FIG. 6, a case is shown in which one primary cell (CC #0) and four secondary cells (CCs #1 to #4) are configured, and in which DL transmission is performed in CCs #0, #1, #3 and #4. Also, a case is shown where the DAI values are configured (accumulated) according to the order of cell IDs. In FIG. 6, CC #4 is the cell with the largest DAI value among the cells that are scheduled, and the downlink control information of CC #4 is the last PDCCH scheduled among the plurality of cells.

In this case, the radio base station adds an extension field (for example, one bit) to the DAI included each cell's in the downlink control information, configures the bit value "1" in the extension fields of CCs #0 and #1, and configures the bit value "0" in the extension field of CC #4.

The user terminal can identify scheduled cells based on the DAIs and the extension fields included in the downlink control information of received cells. When detecting a predetermined bit value (for example, "0") in the extension field of received downlink control information, the user terminal determines that the cell to which the downlink control information corresponds is the specific cell, and controls the feedback of ACKs/NACKs (see FIG. 6A).

In the case shown in FIG. 6A, the user terminal decides to transmit ACKs to CC #0, #1 and #4 and a NACK to CC #3, an feeds back these ACK/NACKs ("1, 1, 0, 1") in a predetermined PUCCH resource. In this case, the user terminal can judge that CC #4 is the cell with the largest DAI, and determine the ACK/NACK codebook size accordingly.

On the other hand, if the user terminal cannot detect the predetermined bit value (for example, "0") in the extension field of received downlink control information, the user terminal judges that it has failed to detect the DL transmission of the cell with the largest DAI, and controls the feedback of ACKs/NACKs accordingly (see FIG. 6B). In the case shown in FIG. 6B, the user terminal decides to transmit ACKs to CCs #0 and #1 and NACKs to CC #3 and #4, and feeds back these ACKs/NACKs ("1, 1, 0, 0") in a predetermined PUCCH resource. In this case, the user terminal can determine the ACK/NACK codebook size on the assumption that the user terminal has failed to detect the cell with the largest DAI.

The radio base station judges that DL signals have not been properly received in CC #3 and CC #4, based on the result ("1, 1, 0, 0") fed back from the user terminal in PUCCH resource 1, and therefore the radio base station can apply retransmission control to CC #3 and CC #4.

As described above, information for identifying the cell with the largest DAI is included in the downlink control information (extension field) of each cell and reported to the user terminal, so that, even when the user terminal fails to detect the cell with the largest DAI, the user terminal still can recognize the failed detection and control the transmission of ACKs/NACKs. By this means, it is possible to match the recognition of the codebook (bit sequence) size between the radio base station and the user terminal, and transmit ACKs/NACKs.

Note that, in LTE, it is possible to configure a different transmission mode (TM: Transmission Mode) in each CC. As for the number of ACK/NACK bits to be transmitted from the user terminal, one bit or a plurality of bits (for example, two bits) may be transmitted depending on the TM. When varying TMs are configured on a per CC basis in the user terminal, the codebook size changes depending on in which CC downlink control information with an additional DAI field of "1" (the bit information for identifying the specific cell) is transmitted. In other words, when different TMs are configured between CCs, it is necessary to know the TM of the CC in which downlink control information with an additional DAI field of "1" is transmitted.

Therefore, information to indicate whether or not a cell in which DL transmission is performed (scheduling target cell) is the specific cell is configured to be included in the downlink control information of each cell and reported, the user terminal can apply spatial bundling to all CCs. In this case, since MIMO is applied, for the demodulation result of the PDSCH of a CC where two or more transport blocks (TBs) are scheduled, a 1-bit ACK/NACK is fed back as an exclusive OR result. In this case, it is possible to match the recognition of the size of the codebook regardless of which TM is configured in each CC and the specific cell (for example, the cell where an additional DAI field of "1" is configured).

Alternatively, if the information to indicate whether or not a cell in which DL transmission is performed is the specific cell is configured to be included in the downlink control information of each cell and reported, the user terminal may feed back 2-bit ACKs/NACKs in all CCs. Alternatively, the user terminal may feed back 2-bit ACKs/NACKs in all CCs if, among all the CCs, there is even one CC where a TM to require feedback of 2-bit ACKs/NACKs is configured, and, otherwise, feed back 1-bit ACKs/NACKs in all CCs.

Alternatively, the user terminal may determine the number of ACK/NACK bits based on the TM configured in each CC, and, the radio base station may try decoding with respect to two patterns of codebooks sizes for use when the ACKs/NACKs for the specific cell are one bit and two bits. In this case, the radio base station can select the codebook size, with which the decoding result is OK, as the codebook size of ACKs/NACKs transmitted from the user terminal.

### (Third Example)

With a third example, a method of reporting information about cells in which DL transmission is performed (scheduling target cells) from the radio base station to the user terminal will be described.

The radio base station can report cell scheduling information to the user terminal using downlink control information (DCI). As a method of reporting this piece of information to the user terminal, it is possible to use a method to use a bitmap format or a method of reporting predetermined bit values that are associated with combinations of cells.

When the bitmap format is used, assuming that cells are configured in the user terminal, whether or not each cell is scheduled is reported to the user terminal using "1" and "0." For example, it is possible to configure a "1" for a scheduled cell and a "0" for an unscheduled cell "0," and report these to the user terminal.

In the bitmap format, although the number of bits to be reported to the user terminal increases according to the number of cells, the scheduling information of each cell can be reported to the user terminal in detail. For example, assuming that 32 CCs are configured in the user terminal, if the bitmap format is used, although it is necessary to include 32 bits of information in a DL control signal to represent the scheduling status of each CC, each cell's scheduling information can be reported individually to the user terminal.

Alternatively, by using the bitmap format, it is possible to report scheduling information to the user terminal using a smaller number of bits than the number of cells configured. For example, if 16 CCs (or 32 CCs) are configured in the user terminal, an 8-bit bitmap format can also be used.

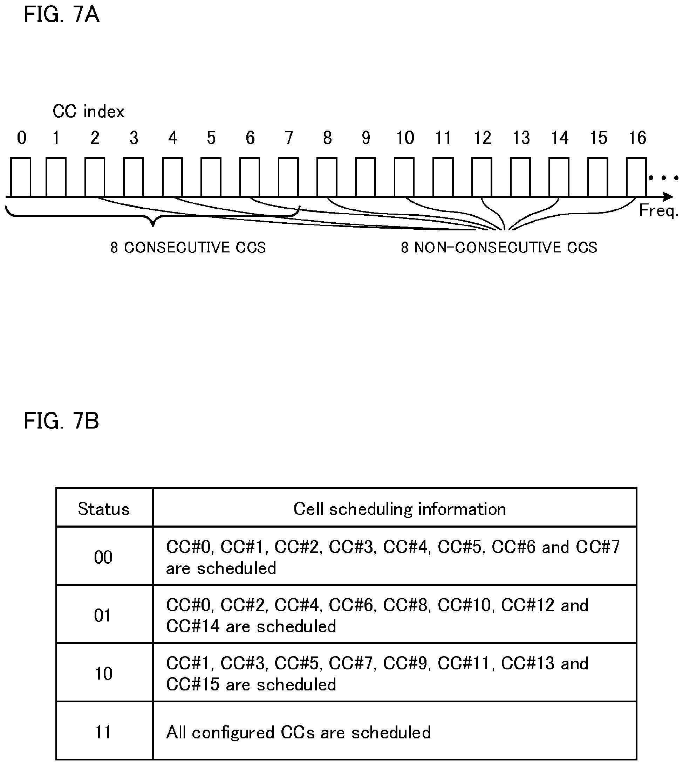

In this case, which cells' scheduling information is reported in the bitmap format may be decided in advance. For example, it is possible to select eight consecutive CCs (CC #0 to #7), or select eight non-consecutive CCs (see FIG. 7A). In this case, although the scheduling by the radio base station is restricted, it is possible to suppress an increase in the overhead of downlink control information. Further, the CCs to select can be reported to the user terminal in advance using higher layer signaling and/or downlink control information.

When predetermined bit values associated with combinations of cells are used, a plurality of combinations of CCs are defined in advance, and these combinations of CCs are associated varying bit values. The radio base station reports the predetermined bit values, corresponding to predetermined combinations, to the user terminal, depending on the cells that are scheduled.

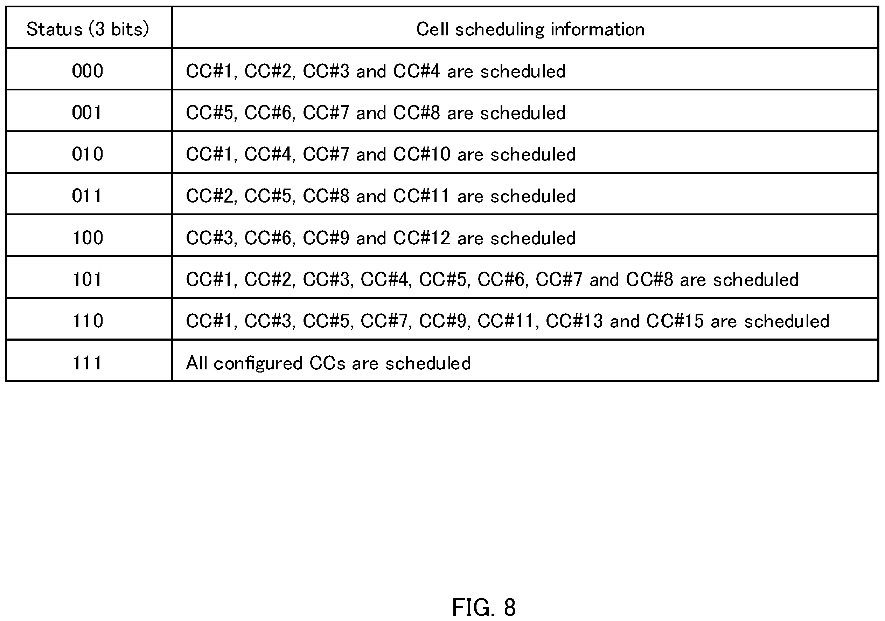

In this case, it is possible to prepare, in advance, a table in which combinations of a plurality of CCs and bit values corresponding thereto are associated (see FIG. 8). FIG. 8 shows, as an example, a case where eight combinations of CCs are defined using 3-bit bit information ("status"). In addition, the radio base station can report information about the combinations of cells, corresponding to respective bit values, to the user terminal, using higher layer signaling or the like.

Although increasing the types of combinations of cells to be defined increases the number of bits of the scheduling information, each cell's scheduling information can be reported to the user terminal in detail. On the other hand, when the bit values to use for the scheduling information are reduced (see FIG. 7B), although the scheduling by the radio base station is restricted, it is possible to suppress an increase in the overhead of downlink control information. FIG. 7B shows a table in which four types of combinations of cells (2 bits) are defined, and from this table, the radio base station selects the combinations of cells to match the cells that are scheduled, and reports the scheduling information to the user terminal.

The radio base station can also control the number of bits that define the scheduling information according to the situation of communication (for example, the number of cells configured in the user terminal).

In addition, the radio base station can include the scheduling information in one downlink control information (DCI) or multiple downlink control information and report the same to the user terminal. When the scheduling information is included in a plurality of pieces of downlink control information, it is possible to generate copies of the same scheduling information and include them in these multiple pieces of downlink control information. Alternatively, the scheduling information may be divided and included in a plurality of pieces of downlink control information.

When the scheduling information of all cells that are configured in the user terminal is included in one DCI, the radio base station may transmit the DCI including the scheduling information in at least one cell. For example, the radio base station can transmit DCI including the scheduling information of all cells in the primary cell.

In this case, the radio base station can generate the DCI using DCI format 1A/1C that is transmitted in the common search space (CSS). In addition, the radio base station can scramble the CRC using C-RNTIs (Cell-Radio Network Temporary Identifiers) or using new user terminal-specific RNTIs.

Alternatively, the radio base station may transmit DCI including the scheduling information of all cells in predetermined cells other than the primary cell. The radio base station may select a plurality of cells as predetermined cells (which may include the primary cell). By transmitting scheduling information in multiple cells, even when the user terminal fails detection in one CC, the user terminal can still acquire the scheduling information from other cells' DL signals.

The information on predetermined cells can be reported from the radio base station to the user terminal using higher layer signaling. Further, the radio base station can generate DCI using DCI format Y, which is transmitted in user terminal-specific search spaces (USSs: UE-specific Search Spaces). Also, when scheduling information is transmitted in multiple cells, it is possible to select the DCI format to include the scheduling information, for each cell, on a separate basis.

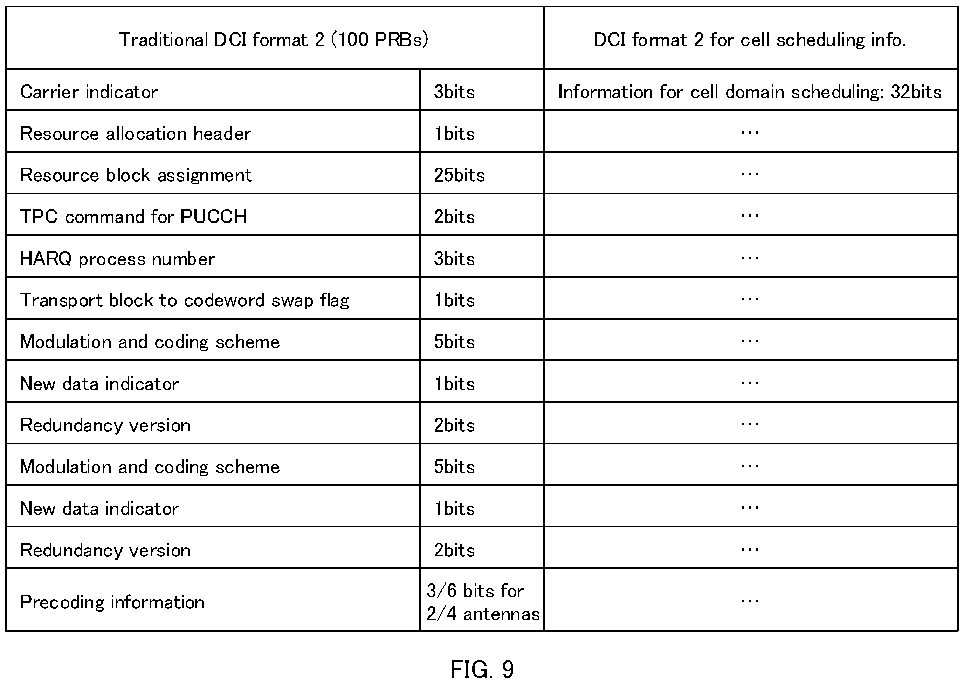

The radio base station can define and use a new DCI format as DCI format Y. Alternatively, the radio base station can be configured to use an existing DCI format as DCI format Y (for example, by replacing the contents of a DCI format). FIG. 9 shows an example of a case where scheduling information is reported to the user terminal by using DCI format 2. A case is assumed here where the CRC of DCI format 2 is scrambled by the C-RNTI.

When the cell scheduling information is defined with 32 bits, it is possible to provide the scheduling information in DCI format 2, and configure zeros in the remaining bit fields (bit information) of existing DCI format 2. By using DCI format 2 like this (by replacing its contents), when blind detection of DCI format 2 is performed, based on the output thereof, the detection result (OK/NG) can be judged using known bits (bits that are known to be configured to zero). By this means, it is possible to ensure high quality without increasing the number of times blind decoding is performed in the user terminal. If DCI format 2 is not detected, the user terminal may decide the codebook size by judging that all CCs are scheduled.

Also, when the scheduling information is divided and included in a plurality of DCIs (so that each DCI includes a part of the scheduling information), the radio base station includes a part of the scheduling information in a given DCI and include the rest of the scheduling information in other DCIs and report these to the user terminal.

In this case, the radio base station can divide the scheduling information into a plurality of pieces, include the divided information in DCIs of different cells, and report these to the user terminal. For example, when dividing the scheduling information into M pieces, the radio base station can transmit the divided scheduling information in different cells (M cells). Alternatively, the radio base station may transmit each divided segment of the scheduling information in a plurality of cells (N × M cells).

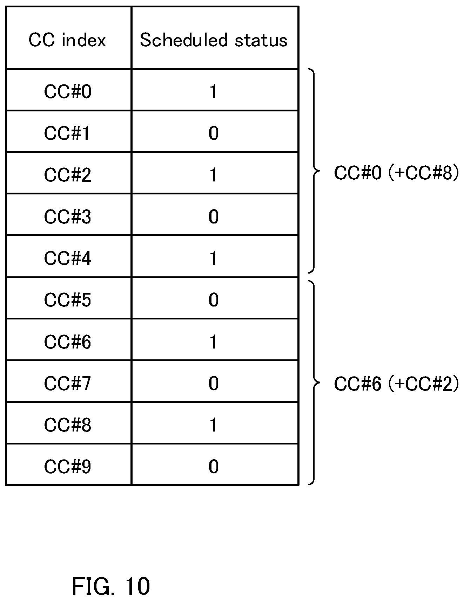

FIG. 10 shows a case where ten CCs (CC #0 to CC #9) are configured in the user terminal, and where even-numbered CCs (CCs #0, #2, #4, #6 and #8) are scheduled in a given subframe. In this case, the radio base station can include the scheduling information for CCs #0 to #4 and the scheduling information for CCs #5 to #9 in the DCIs of different cells, and transmit these to the user terminal. That is, case is shown here where the scheduling information of CC #0 to CC #9 is divided into two (M = 2) and reported to the user terminal.

FIG. 10 shows a case where the radio base station includes the scheduling information for the first five CCs (CCs #0 to #4) in the DCI of CC #0 and the scheduling information for the remaining five CCs (CCs #5 to #9) in the DCI of CC #6, and transmits these. Note that which CCs' scheduling information is transmitted may be reported to the user terminal in advance by higher layer signaling, or may be determined based on the cell indices or the like.

Also, in the radio base station, the scheduling information of the first five CCs (CCs #0 to #4) may be included not only in the DCI of CC #0, but also in the DCI of another CC (CC #8 in this case), and transmitted. Likewise, in the radio base station, the scheduling information of the remaining five CCs (CCs #5 to #9) may be included not only in the DCI of CC #6, but also in DCI of another CC (CC #2 in this case), and transmitted. As a result of this, even when the user terminal fails to detect the DCIs of CC #0 and/or CC #6, the user terminal can receive the DCIs of other cells and acquire the scheduling information.

Also, when the scheduling information is divided and included in a plurality of DCIs in a distributed manner, the radio base station can generate each DCI by using DCI format Y, which is transmitted in user terminal-specific search spaces.

The radio base station can define and use a new DCI format as DCI format Y. Alternatively, the radio base station can be configured to use an existing DCI format as DCI format Y (for example, by replacing the contents of a DCI format). Alternatively, the radio base station can also use a DCI format configuration in which an extension field for defining scheduling information is added to an existing DCI format as DCI format Y.

### (Fourth Example)

A case will be described with a fourth example where information on the ACK/NACK codebook size is configured using a predetermined field (for example, the ARI (TPC field)) included in the downlink control information of scheduled cells (for example, secondary cells). To be more specific, it is assumed that the radio base station and the user terminal know, in advance, ACK/NACK codebook size candidates that correspond to the bit information (bit value) of a predetermined field (for example, the ARI). Then, the user terminal switches the codebook size according to the ARI values included in the downlink control information of secondary cells (CCs) reported from the radio base station.

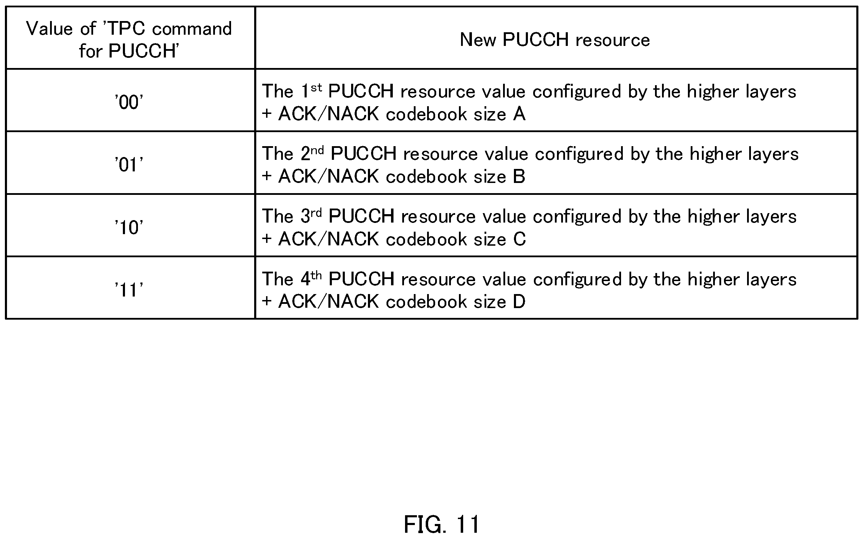

For example, assume that CC #0 to CC #10 are configured in the user terminal in CA. At this time, in addition to PUCCH resource, the ACK/NACK codebook size can be specified in the ARI (TPC field) included in the downlink control information of secondary cells (CCs) (see FIG. 11).

For example, if the ARI is "00" or "01," it is possible to use a codebook size for five CCs (here, codebook size A and B = five CCs), and if the ARI is "10" or "11," it is possible to use a codebook size for ten CCs (here, codebook size C and D = ten CCs). It is also possible to provide three or more codebook sizes. The user terminal may apply varying PUCCH formats depending on ARI values or depending on ARI-specified codebook sizes, or the user terminal may apply the same PUCCH format.

The ACK/NACK codebook size to correspond to each ARI value may be determined implicitly according to the number of CCs configured in CA or the TM, or the ACK/NACK codebook size may be explicitly reported in advance from the base station to the user terminal by higher layer signaling.

In this way, since information that specifies the ACK/NACK codebook size is included in each cell's downlink control information (predetermined field) and reported to the user terminal, it is possible to match the recognition of the codebook (bit sequence) size between the radio base station and the user terminal, and transmit ACKs/NACKs accordingly. Note that the information on the ACK/NACK codebook size may be configured in a field other the ARI field. Alternatively, it is also possible to add an additional extension field in downlink control information (for example, add an extension field to the DAI) and configure the information on the ACK/NACK codebook size therein. In addition, the radio base station can report the information on the ACK/NACK codebook size by using the DCI of the primary cell.

### (Radio Communication System)

Now, the structure of the radio communication system according to an embodiment of the present invention will be described below. In this radio communication system, the radio communication methods of the above-described embodiments are employed. Note that the radio communication methods of the above-described embodiments may be applied individually or may be applied in combination.

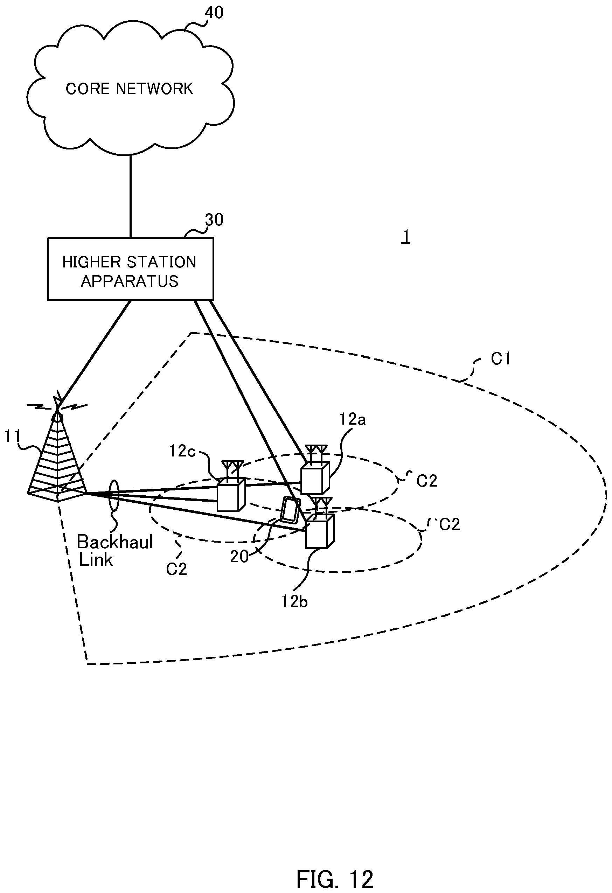

FIG. 12 is a diagram to show an example of a schematic structure of a radio communication system according to one embodiment of the present invention. The radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit. Note that the radio communication system 1 may be referred to as "SUPER 3G," "LTE-A" (LTE-Advanced), "IMT-Advanced," "4G," "5G," "FRA" (Future Radio Access) and so on.

The radio communication system 1 shown in FIG. 12 includes a radio base station 11 that forms a macro cell C1, and radio base stations 12a to 12c that form small cells C2, which are placed within the macro cell C1 and which are narrower than the macro cell C1. Also, user terminals 20 are placed in the macro cell C1 and in each small cell C2.

The user terminals 20 can connect with both the radio base station 11 and the radio base stations 12. The user terminals 20 may use the macro cell C1 and the small cells C2, which use different frequencies, at the same time, by means of CA or DC. Also, the user terminals 20 can execute CA or DC by using a plurality of cells (CCs) (for example, six or more CCs).

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Note that the configuration of the frequency band for use in each radio base station is by no means limited to these.

A structure may be employed here in which wire connection (for example, means in compliance with the CPRI (Common Public Radio Interface) such as optical fiber, the X2 interface and so on) or wireless connection is established between the radio base station 11 and the radio base station 12 (or between two radio base stations 12).

The radio base station 11 and the radio base stations 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME) and so on, but is by no means limited to these. Also, each radio base station 12 may be connected with higher station apparatus 30 via the radio base station 11.

Note that the radio base station 11 is a radio base station having a relatively wide coverage, and may be referred to as a "macro base station," a "central node," an "eNB" (eNodeB), a "transmitting/receiving point" and so on. Also, the radio base stations 12 are radio base stations having local coverages, and may be referred to as "small base stations," "micro base stations," "pico base stations," "femto base stations," "HeNBs" (Home eNodeBs), "RRHs" (Remote Radio Heads), "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals or stationary communication terminals.

In the radio communication system 1, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to these combinations, and OFDMA may be used in the uplink.

In the radio communication system 1, a downlink shared channel (PDSCH: Physical Downlink Shared CHannel), which is used by each user terminal 20 on a shared basis, a broadcast channel (PBCH: Physical Broadcast CHannel), downlink L1/L2 control channels and so on are used as downlink channels. User data, higher layer control information and predetermined SIBs (System Information Blocks) are communicated in the PDSCH. Also, the MIB (Master Information Blocks) is communicated in the PBCH.

The downlink L1/L2 control channels include downlink control channels (the PDCCH (Physical Downlink Control CHannel) and/or the EPDCCH (Enhanced Physical Downlink Control Channel)), the PCFICH (Physical Control Format Indicator CHannel), the PHICH (Physical Hybrid-ARQ Indicator CHannel) and so on. Downlink control information (DCI) including PDSCH and PUSCH scheduling information is communicated by the PDCCH. The number of OFDM symbols for use for the PDCCH is communicated by the PCFICH. HARQ delivery acknowledgement signals (ACKs/NACKs) in response to the PUSCH are communicated by the PHICH. The EPDCCH is frequency-division-multiplexed with the PDSCH (downlink shared data channel) and used to communicate DCI and so on, like the PDCCH.

In the radio communication system 1, an uplink shared channel (PUSCH: Physical Uplink Shared CHannel), which is used by each user terminal 20 on a shared basis, an uplink control channel (PUCCH: Physical Uplink Control CHannel), a random access channel (PRACH: Physical Random Access CHannel) and so on are used as uplink channels. User data and higher layer control information are communicated by the PUSCH. Uplink control information (UCI: Uplink Control Information), including at least one of delivery acknowledgment information (ACK/NACK) and radio quality information (CQI), is transmitted by the PUSCH or the PUCCH. By means of the PRACH, random access preambles for establishing connections with cells are communicated.

### <Radio base station>

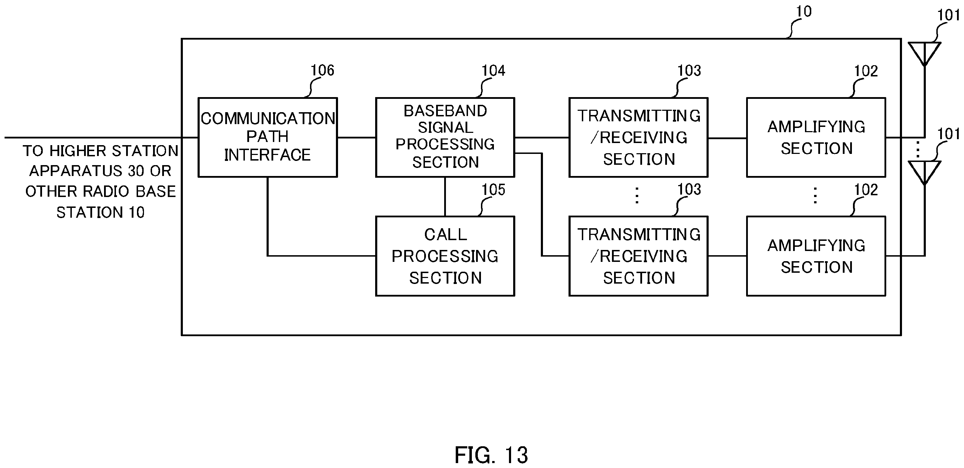

FIG. 13 is a diagram to show an example of an overall structure of a radio base station according to one embodiment of the present invention. A radio base station 10 has a plurality of transmitting/receiving antennas 101, amplifying sections 102, transmitting/receiving sections 103, a baseband signal processing section 104, a call processing section 105 and a communication path interface 106. Note that the transmitting/receiving sections 103 are comprised of transmitting sections and receiving sections.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Baseband signals that are pre-coded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101.

The transmitting/receiving sections (receiving sections) 103 receive HARQ-ACKs or PUSCHs transmitted from user terminals. The transmitting/receiving sections (transmission sections) 103 can transmit information that indicates whether or not a given cell is a specific cell (for example, the cell having the largest DAI value). For example, the transmitting/receiving sections (transmission sections) 103 can configure and transmit bit information that indicates whether or not a given cell is a specific cell in the power control field included in the downlink control information of each cell. Furthermore, the transmitting/receiving sections (transmission sections) 103 can transmit information (scheduling information) on cells in which DL transmission is performed. Alternatively, the transmitting/receiving section (transmission sections) 103 can transmit information on the ACK/NACK codebook size using downlink control information or the like.

The transmitting/receiving sections 103 can be constituted by transmitters/receivers, transmitting/receiving circuits or transmitting/receiving devices that can be described based on common understanding of the technical field to which the present invention pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base station 10 and manages the radio resources.

The communication path interface section 106 transmits and receives signals to and from the higher station apparatus 30 via a predetermined interface. Also, the communication path interface 106 may transmit and/or receive signals (backhaul signaling) with other radio base stations 10 via an inter-base station interface (for example, an interface in compliance with the CPRI (Common Public Radio Interface), such as optical fiber, the X2 interface, etc.).

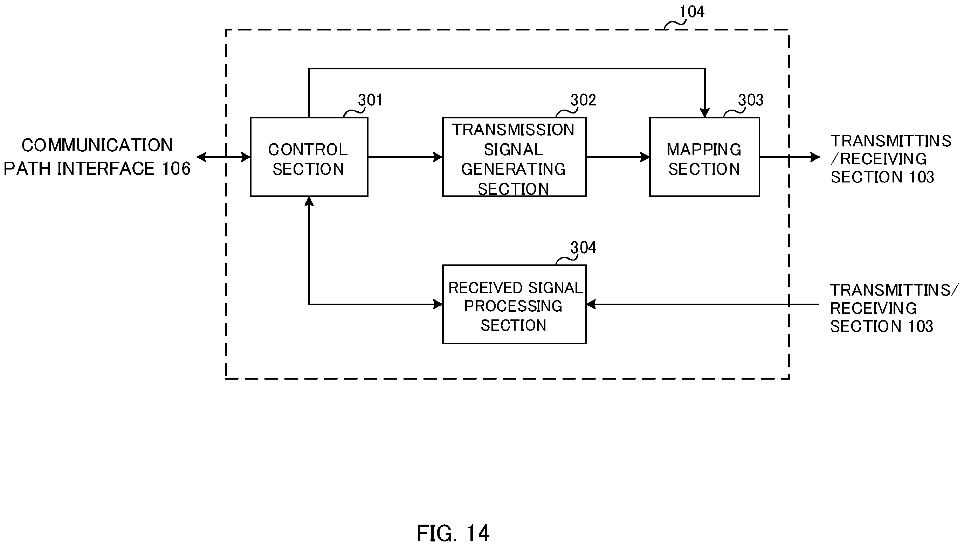

FIG. 14 is a diagram to show an example of a functional structure of a radio base station according to the present embodiment. Note that, although FIG. 14 primarily shows functional blocks that pertain to characteristic parts of the present embodiment, the radio base station 10 has other functional blocks that are necessary for radio communication as well. As shown in FIG. 14, the baseband signal processing section 104 has a control section (scheduler) 301, a transmission signal generating section (generating section) 302, a mapping section 303 and a received signal processing section 304.

The control section (scheduler) 301 controls the scheduling (for example, resource allocation) of downlink data signals that are transmitted in the PDSCH and downlink control signals that are communicated in the PDCCH and/or the EPDCCH. Also, the control section 301 controls the scheduling of system information, synchronization signals, paging information, CRSs (Cell-specific Reference Signals), CSI-RSs (Channel State Information Reference Signals) and so on. Furthermore, the control section 301 also controls the scheduling of uplink reference signals, uplink data signals that are transmitted in the PUSCH, and uplink control signals that are transmitted in the PUCCH and/or the PUSCH.

The control section 301 controls the retransmission of downlink data/new data transmission based on delivery acknowledgment signals (HARQ-ACKs) fed back from the user terminals. Further, the control section 301 can control DL transmission by including information for identifying a specific cell, in the DCI of each cell where DL transmission is performed. For example, the control section 301 can configure, in a predetermined field included in the DCI of a specific cell, bit information that is different from the bit information configured in the predetermined field in other cells.

To be more specific, when the power control field is used as the predetermined field and the primary cell is included in the other cells, the control section 301 configures bit information that commands PUCCH power control in the power control field of the primary cell. Also, when a secondary cell is included in the other cells, the control section 301 can configure bit information that indicates PUCCH allocation resources in the power control field of the secondary cell (see FIG. 5). Alternatively, the control section 301 can use an extension field of the DAI as the predetermined field (see FIG. 6).

Further, the control section 301 can control DL transmission by including information (scheduling information) on cells in which DL transmission is performed, in at least one of the DCIs of the cells that perform DL transmission. For example, the control section 301 can exert control so that a plurality of pieces of information that represent the combinations of cells are reported to the user terminal using higher layer signaling, and a DCI to designate a predetermined combination of cells is reported to the user terminal according to the cells that perform DL transmission.

Further, the control section 301 can perform control so that the information on the cells that perform DL transmission is transmitted such that the same information is included in the DCI of one or more cells. Alternatively, the control section 301 can control transmission by including and transmitting a part of the information on the cells that perform DL transmission in the DCI of the first cell, and the rest of the information on the cells that perform DL transmission in the DCI of a second cell. Alternatively, the control section 301 can transmit information on the ACK/NACK codebook size by including it in DCI (see FIG. 11). Note that, for the control section 301, a controller, a control circuit or a control device that can be described based on common understanding of the technical field to which the present invention pertains can be used.

The transmission signal generating section 302 generates DL signals (downlink control signals, downlink data signals, downlink reference signals and so on) based on commands from the control section 301, and outputs these signals to the mapping section 303. To be more specific, the transmission signal generation section 302 generates a downlink data signal (PDSCH) including user data, and outputs it to the mapping section 303. Further, the transmission signal generation section 302 generates a downlink control signal (PDCCH/EPDCCH) including DCI (UL grant), and outputs it to the mapping section 303. Further, the transmission signal generation section 302 generates downlink reference signals such as CRS and CSI-RS, and outputs them to the mapping section 303.

For the transmission signal generating section 302, a signal generator, a signal generating circuit or a signal generating device that can be described based on common understanding of the technical field to which the present invention pertains can be used.

The mapping section 303 maps the downlink signals generated in the transmission signal generating section 302 to predetermined radio resources based on commands from the control section 301, and outputs these to the transmitting/receiving sections 103. For the mapping section 303, mapper, a mapping circuit or a mapping device that can be described based on common understanding of the technical field to which the present invention pertains can be used.

The received signal processing section 304 performs the reception process (for example, demapping, demodulation, decoding, etc.) of the UL signals (HARQ-ACK, PUSCH, etc.) transmitted from the user terminal 20. The processing results are output to the control section 301.

The receiving process section 304 can be constituted by a signal processor, a signal processing circuit or a signal processing device, and a measurer, a measurement circuit or a measurement device that can be described based on common understanding of the technical field to which the present invention pertains.

### <User terminal>

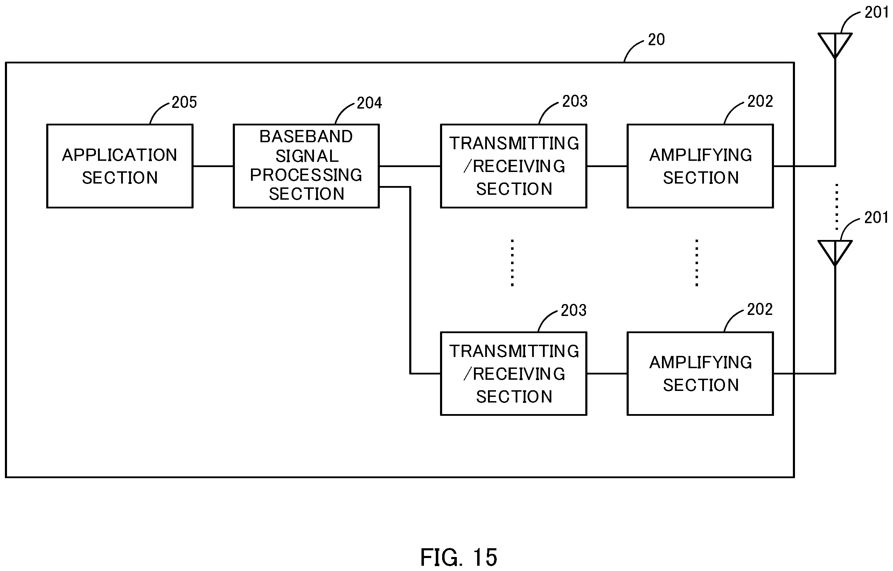

FIG. 15 is a diagram to show an example of an overall structure of a user terminal according to an embodiment of the present invention. A user terminal 20 has a plurality of transmitting/receiving antennas 201 for MIMO communication, amplifying sections 202, transmitting/receiving sections 203, a baseband signal processing section 204 and an application section 205. Note that the transmitting/receiving sections 203 may be comprised of transmitting sections and receiving sections.

Radio frequency signals that are received in a plurality of transmitting/receiving antennas 201 are each amplified in the amplifying sections 202. Each transmitting/receiving section 203 receives the downlink signals amplified in the amplifying sections 202. The received signal is subjected to frequency conversion and converted into the baseband signal in the transmitting/receiving sections 203, and output to the baseband signal processing section 204.

The transmitting/receiving section (receiving section) 203 receives DL data signals (for example, the PDSCH) and downlink control information (for example, DCI including UL grants, DAIs, power control field, etc.). Further, the transmitting/receiving section (receiving section) 203 can receive information for identifying a specific cell and/or information (scheduling information) on cells that perform DL transmission. Further, the transmitting/receiving section (receiving section) 203 can receive information on the ACK/NACK codebook size. Further, the transmitting/receiving section (transmission section) 203 transmits HARQ-ACKs for DL data signals and the PUSCH for the UL grant. Note that, for the transmitting/receiving sections 203, transmitters/receivers, transmitting/receiving circuits or transmitting/receiving devices that can be described based on common understanding of the technical field to which the present invention pertains can be used.

In the baseband signal processing section 204, the baseband signal that is input is subjected to an FFT process, error correction decoding, a retransmission control receiving process, and so on. Downlink user data is forwarded to the application section 205. The application section 205 performs processes related to higher layers above the physical layer and the MAC layer, and so on. Furthermore, in the downlink data, broadcast information is also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, pre-coding, a discrete Fourier transform (DFT) process, an IFFT process and so on, and the result is forwarded to each transmitting/receiving section 203. The baseband signal that is output from the baseband signal processing section 204 is converted into a radio frequency bandwidth in the transmitting/receiving sections 203. The radio frequency signals that are subjected to frequency conversion in the transmitting/receiving sections 203 are amplified in the amplifying sections 202, and transmitted from the transmitting/receiving antennas 201.

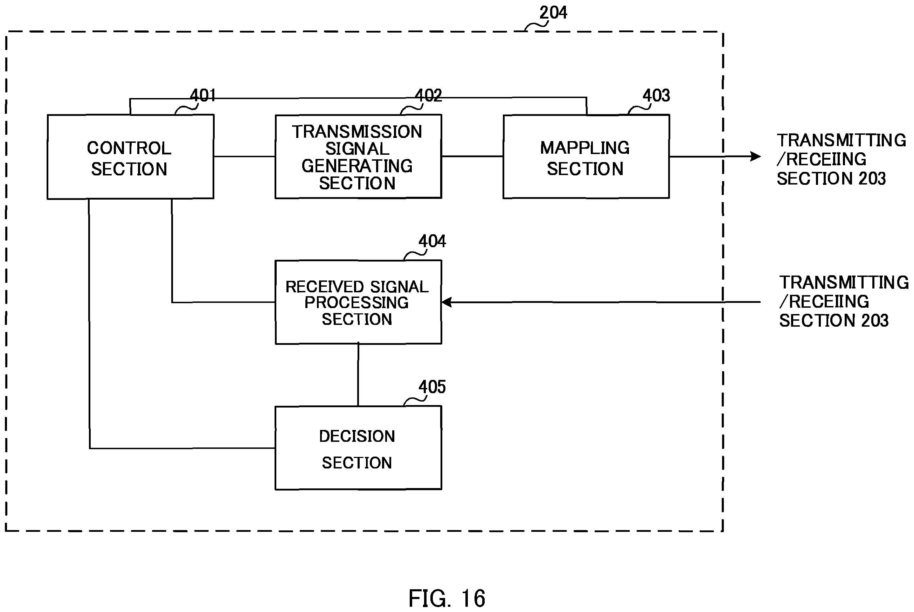

FIG. 16 is a diagram to show an example of a functional structure of a user terminal according to the present embodiment. Note that, although FIG. 16 primarily shows functional blocks that pertain to characteristic parts of the present embodiment, the user terminal 20 has other functional blocks that are necessary for radio communication as well. As shown in FIG. 16, the baseband signal processing section 204 provided in the user terminal 20 has a control section 401, a transmission signal generating section 402, a mapping section 403, a received signal processing section 404 and a decision section 405.

The control section 401 acquires the downlink control signals (signals transmitted in the PDCCH/EPDCCH) and downlink data signals (signals transmitted in the PDSCH) transmitted from the radio base station 10, from the received signal processing section 404. The control section 401 controls the generation of uplink control signals (for example, delivery acknowledgement signals (HARQ-ACKs) and so on) and uplink data signals based on the downlink control signals, the results of deciding whether or not re transmission control is necessary for the downlink data signals, and so on. To be more specific, the control section 401 can control the transmission signal generating section 402, the mapping section 403 and the received signal processing section 404.

The control section 401 can control the transmission of ACKs/NACKs based on information included in the DCI of each cell received and indicating whether or not each cell is a specific cell. For example, the control section 401 can control ACK/NACK feedback by knowing the scheduling state based on the power control field included in the DCI and the extension field in the DAI. Alternatively, the control section 401 can control the ACK/NACK bit sequence to be fed back based on the information on the ACK/NACK codebook size included in DCI. Note that, for the control section 401, a controller, a control circuit or a control device that can be described based on common understanding of the technical field to which the present invention pertains can be used.

The transmission signal generating section 402 generates UL signals based on commands from the control section 401, and outputs these signals to the mapping section 403. For example, the transmission signal generating section 402 generates uplink control signals such as delivery acknowledgement signals (HARQ-ACKs), channel state information (CSI) and so on, based on commands from the control section 401.

Also, the transmission signal generating section 402 generates uplink data signals based on commands from the control section 401. For example, when a UL grant is included in a downlink control signal that is reported from the radio base station 10, the control section 401 commands the transmission signal generating section 402 to generate an uplink data signal. For the transmission signal generating section 402, a signal generator, a signal generating circuit or a signal generating device that can be described based on common understanding of the technical field to which the present invention pertains can be used.

The mapping section 403 maps the uplink signals (uplink control signals and/or uplink data) generated in the transmission signal generating section 402 to radio resources based on commands from the control section 401, and output the result to the transmitting/receiving sections 203. For the mapping section 403, mapper, a mapping circuit or a mapping device that can be described based on common understanding of the technical field to which the present invention pertains can be used.

The received signal processing section 404 performs receiving processes (for example, demapping, demodulation, decoding and so on) of DL signals (for example, downlink control signals transmitted from the radio base station, downlink data signals transmitted in the PDSCH, and so on). The received signal processing section 404 outputs the information received from the radio base station 10, to the control section 401 and the decision section 405. The received signal processing section 404 outputs, for example, broadcast information, system information, RRC signaling, DCI and so on, to the control section 401.

The received signal processing section 404 can be constituted by a signal processor, a signal processing circuit or a signal processing device, and a measurer, a measurement circuit or a measurement device that can be described based on common understanding of the technical field to which the present invention pertains. Also, the received signal processing section 404 can constitute the receiving section according to the present invention.

The decision section 405 makes retransmission control decisions (ACKs/NACKs) based on the decoding results in the receiving process section 404, and, furthermore, outputs the results to the control section 401. When downlink signals (PDSCH) are transmitted from multiple CCs (for example, six or more CCs), retransmission control decisions (ACKs/NACKs) are made on a per CC basis, and output to the control section 401. For the decision section 405, a decision maker, a decision making circuit or a decision making device that can be described based on common understanding of the technical field to which the present invention pertains can be used.

Note that the block diagrams that have been used to describe the above embodiments show blocks in functional units. These functional blocks (components) may be implemented in arbitrary combinations of hardware and software. Also, the means for implementing each functional block is not particularly limited. That is, each functional block may be implemented with one physically-integrated device, or may be implemented by connecting two physically-separate devices via radio or wire and using these multiple devices.

For example, part or all of the functions of the radio base station 10 and the user terminal 20 may be implemented by using hardware such as an ASIC (Application-Specific Integrated Circuit), a PLD (Programmable Logic Device), an FPGA (Field Programmable Gate Array) and so on. Also, the radio base stations 10 and user terminals 20 may be implemented with a computer device that includes a processor (CPU), a communication interface for connecting with networks, a memory and a computer-readable storage medium that holds programs. That is, the radio base stations and user terminals according to an embodiment of the present invention may function as computers that execute the processes of the radio communication method of the present invention.

Here, the processor and the memory are connected with a bus for communicating information. Also, the computer-readable recording medium is a storage medium such as, for example, a flexible disk, an opto-magnetic disk, a ROM (Read Only Memory), an EPROM (Erasable Programmable ROM), a CD-ROM (Compact Disc-ROM), a RAM (Random Access Memory), a hard disk and so on. Also, the programs may be transmitted from the network through, for example, electric communication channels. Also, the radio base stations 10 and user terminals 20 may include input devices such as input keys and output devices such as displays.

The functional structures of the radio base stations 10 and user terminals 20 may be implemented with the above-described hardware, may be implemented with software modules that are executed on the processor, or may be implemented with combinations of both. The processor controls the whole of the user terminals by running an operating system. Also, the processor reads programs, software modules and data from the storage medium into the memory, and executes various types of processes.

Here, these programs have only to be programs that make a computer execute each operation that has been described with the above embodiments. For example, the control section 401 of the user terminals 20 may be stored in the memory and implemented by a control program that operates on the processor, and other functional blocks may be implemented likewise.

Also, software and commands may be transmitted and received via communication media. For example, when software is transmitted from a website, a server or other remote sources by using wired technologies such as coaxial cables, optical fiber cables, twisted-pair cables and digital subscriber lines (DSL) and/or wireless technologies such as infrared radiation, radio and microwaves, these wired technologies and/or wireless technologies are also included in the definition of communication media.

Note that the terminology used in this description and the terminology that is needed to understand this description may be replaced by other terms that convey the same or similar meanings. For example, "channels" and/or "symbols" may be replaced by "signals" (or "signaling"). Also, "signals" may be "messages." Furthermore, "component carriers" (CCs) may be referred to as "carrier frequencies," "cells" and so on.

Also, the information and parameters described in this description may be represented in absolute values or in relative values with respect to a predetermined value, or may be represented in other information formats. For example, radio resources may be specified by indices.

The information, signals and/or others described in this description may be represented by using a variety of different technologies. For example, data, instructions, commands, information, signals, bits, symbols and chips, all of which may be referenced throughout the description, may be represented by voltages, currents, electromagnetic waves, magnetic fields or particles, optical fields or photons, or any combination of these.

The examples/embodiments illustrated in this description may be used individually or in combinations, and may be switched depending on the implementation. Also, a report of predetermined information (for example, a report to the effect that "X holds") does not necessarily have to be sent explicitly, and can be sent implicitly (by, for example, not reporting this piece of information).

Reporting of information is by no means limited to the example s/embodiments described in this description, and other methods may be used as well. For example, reporting of information may be implemented by using physical layer signaling (for example, DCI (Downlink Control Information) and UCI (Uplink Control Information)), higher layer signaling (for example, RRC (Radio Resource Control) signaling, MAC (Medium Access Control) signaling, and broadcast information (the MIB (Master Information Block) and SIBs (System Information Blocks))), other signals or combinations of these. Also, RRC signaling may be referred to as "RRC messages," and can be, for example, an RRC connection setup message, RRC connection reconfiguration message, and so on.

The examples/embodiments illustrated in this description may be applied to LTE (Long Term Evolution), LTE-A (LTE-Advanced), SUPER 3G, IMT-Advanced, 4G, 5G, FRA (Future Radio Access), CDMA 2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), and other adequate systems, and/or next-generation systems that are enhanced based on these.

The order of processes, sequences, flowcharts and so on that have been used to describe the examples/embodiments herein may be re-ordered as long as inconsistencies do not arise. For example, although various methods have been illustrated in this description with various components of steps in exemplary orders, the specific orders that illustrated herein are by no means limiting.

Now, although the present invention has been described in detail above, it should be obvious to a person skilled in the art that the present invention is by no means limited to the embodiments described herein. The present invention can be implemented with various corrections and in various modifications, without departing from the spirit and scope of the present invention defined by the recitations of claims. Consequently, the description herein is provided only for the purpose of explaining example s, and should by no means be construed to limit the present invention in any way.

The disclosure of Japanese Patent Application No. 2015-159978, filed on August 13, 2015, including the specification, drawings and abstract, is incorporated herein by reference in its entirety.

## Claims

1. A radio base station that communicates with a user terminal that can use a plurality of cells, the radio base station comprising:
a control section that controls DL transmission from each cell; and
a receiving section that receives ACKs/NACKs fed back from the user terminal in response to DL transmission,
wherein the control section controls DL transmission by including, in downlink control information of each cell that performs DL transmission, information that indicates whether or not each cell transmitting the downlink control information is a specific cell.

2. The radio base station according to claim 1, wherein the control section configures, in a predetermined field included in the downlink control information of the specific cell, bit information that is different from bit information that is configured in the predetermined field in other cells.

3. The radio base station according to claim 2, wherein, the control section uses a power control field as the predetermined field, configures bit information that commands power control for an uplink control channel in a power control field of a primary cell when the primary cell is included in the other cells, and configures bit information that indicates an allocation resource for the uplink control channel in a power control field of a secondary cell when the secondary cell is included in the other cells.

4. The radio base station according to claim 2, wherein the control section uses an extension field of a DL assignment index field as the predetermined field.

5. The radio base station according to one of claims 1 to 4, wherein the specific cell is a cell in which a value of a DL assignment index, included in the downlink control information of each cell, is the largest among cells that perform DL transmission, or a cell with a largest cell index.

6. A radio base station that communicates with a user terminal that can use a plurality of cells, the radio base station comprising:
a control section that controls DL transmission from each cell; and
a receiving section that receives ACKs/NACKs transmitted from the user terminal in response to DL transmission,
wherein the control section controls DL transmission by including, in at least one of downlink control information of cells that perform DL transmission, information on cells that perform DL transmission.

7. The radio base station according to claim 6, wherein the control section reports a plurality of pieces of information that represent combinations of cells, to the user terminal, by higher layer signaling, and transmits downlink control information that designates a specific combination of cells, to the user terminal, depending on cells that perform DL transmission.

8. The radio base station according to claim 6 or claim 7, wherein the control section controls transmission by including the same information on cells that perform DL transmission in downlink control information of one or a plurality of cells, or by including part of the information on cells that perform DL transmission in downlink control information of a first cell and including the rest of the information on cells that perform DL transmission in downlink control information of a second cell.

9. A user terminal that can communicate by using a plurality of cells, the user terminal comprising:
a transmission section that transmits ACKs/NACKs in response to DL signals transmitted from each cell;
a receiving section that receives downlink control information of cells in which DL signals are transmitted; and
a control section that controls transmission of the ACKs/NACKs based on information that indicates whether or not each cell transmitting the received downlink control information is a specific cell, included in the received downlink control information of each cell received.

10. A radio communication method comprising the steps of:
performing DL transmission from each cell; and
receiving ACKs/NACKs transmitted from a user terminal in response to DL transmission,
wherein DL transmission is controlled by including, in downlink control information of each cell that performs DL transmission, information that indicates whether or not each cell transmitting the downlink control information is a specific cell.
